# EUROPEAN PATENT SPECIFICATION

(11) **EP 2 173 225 B1**
(45) Date of publication and mention of the grant of the patent: **29.12.2010**
(21) Application number: 08789065.3
(22) Date of filing: 31.07.2008
(51) Int. Cl.: A47J 45/07

(54) **SEPARABLE COUPLING WITH IMPROVED SEAL BETWEEN HANDLE AND SAUCEPAN**
LÖSBARE KOPPLUNG MIT VERBESSERTER DICHTUNG ZWISCHEN STIEL UND KOCHTOPF
ACCOUPLEMENT SÉPARABLE AVEC ÉTANCHÉITÉ AMÉLIORÉE ENTRE UN MANCHE ET UNE CASSEROLE

(30) Priority: 03.08.2007 IT MI20070284 U
(43) Date of publication of application: 14.04.2010
(73) Proprietor: Bogani, Giuseppe, 22069 Rovellasca (CO) (IT)
(72) Inventor: Bogani, Giuseppe, 22069 Rovellasca (CO) (IT)
(74) Representative: Faraggiana, Vittorio
(86) International application number: PCT/IB2008/002116
(87) International publication number: WO 2009/019594

(56) References cited:
- WO-A-00/21422

## Description

This invention refers to a separable coupling with improved seal between a handle and a saucepan.

In the prior art separable couplings between handle and saucepan are known. An example of such a type of coupling is shown in EP 1121041. Such a coupling exploits the reaction between two opposite surfaces of a rotating cam to obtain a firm fit of the handle when the coupling is completed. The tolerances of such a system have to be of necessity very small to prevent clearances remaining that would make the coupling not completely stiff and would give the user a sensation of instability. The need to have very small clearances makes the achievement of the coupling very costly and often requires a final calibration of each coupling made.

The general object of the present invention is to remedy the aforementioned drawbacks by providing a separable coupling that makes a firm and secure coupling, with a satisfying sensation of solidity for the user, without necessarily requiring great precision in the making to reduce clearances.

In view of this object, it has been decided to make, according to the invention, a removable coupling between a handle and a saucepan comprising a first element fixed to the saucepan and a second element fixed to the handle, the first element comprising in turn a protruding shelf with a through hole therein and the second element comprising a coupling tooth that is inserted into said hole to traverse said hole (16) and be arranged parallel to and below a shelf, there being a cam element in the second element, which is rotatable to a locking position to push with a first cam surface on an edge of said hole to grip a part of the shelf between said first cam surface and a facing protruding part of the second element, the distance between the cam surface and the protruding part being made less than the width of the part of the shelf that has to be gripped and the protruding part being elastically yieldable to enable the cam to rotate in the gripping position.

In order to make the explanation of the innovative principles of the present invention and the advantages thereof over the prior art clearer, with the help of the attached drawings a possible embodiment applying such principles will be disclosed below by way of example. In the drawings:
- figure 1 is a longitudinal section of the coupling made according to the invention.
- figure 2 is a lower view of the coupling in figure 1;
- figures 3, 4 and 5 are perspective schematic views of versions of an element of the coupling in figure 1.

With reference to the figures, a coupling, indicated generally by 10, made according to the invention, comprises a first coupling element 11, fixed on the saucepan 12, and a second element 13, fixed to the handle 14. The saucepan and handle may have any known shape and will not be shown or disclosed further here.

The element 11 has a shelf 15 that protrudes laterally from the saucepan and has a coupling hole 16 for the passage of a tooth or edge 17 protruding from the front of a plate 25 of the second element 13 and staggered downwards to be arranged on the lower face of the shelf 15.

The second element 13 also comprises a cam element 19 that is rotated by an operating element or lever 18 through a pivot 27. Advantageously, the pivot 27 is riveted on a metal plate 30 into which the operating element 18 is snap-fitted, which is, for example, made of plastics. A tooth 31 can act as a stop to the rotation.

The coupling 13 part fixed to the handle has a rear protrusion 20 on the plate 25 opposite the coupling tooth 17, which rear protrusion 20 is intended to constitute an abutment for the head edge or zone 21 of the part 15.

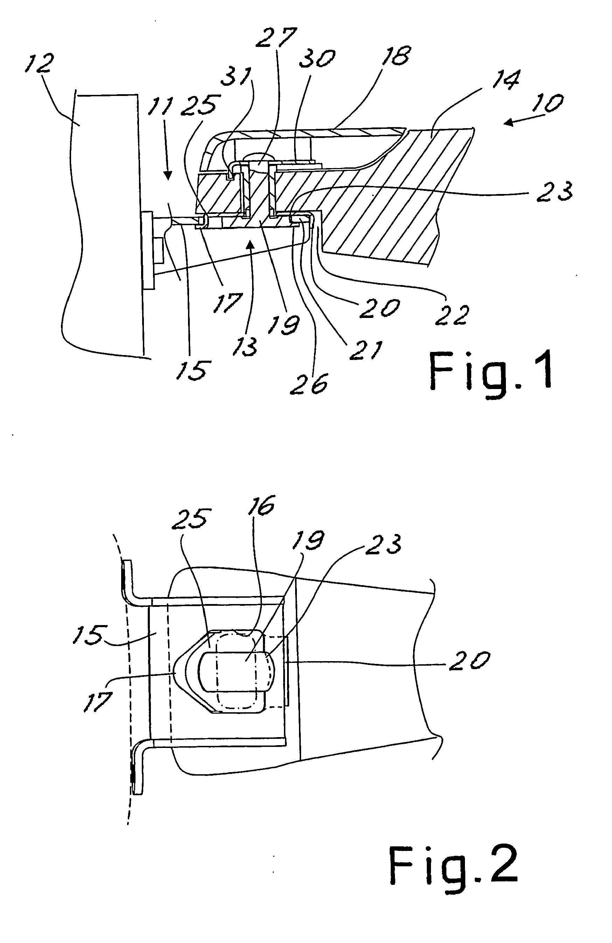

As can be seen well in figures 1 and 2, the distance between the active end 23 of the cam element (when the cam is in the locking position shown in the figures) and the rear part 20 of the fixed element is made slightly less than the width of the shelf part 21 that has to be gripped between the cam and the protruding part 20. The protruding part 20 is made as an elastically yielding part to be suitably deviated during rotation of the cam to the locking or gripping position. The elastic yieldability is chosen so as to enable the cam to rotate manually but at the same time prevent clearances between the handle and saucepan during normal use of the saucepan. In order to prevent elastic flexure, a suitable rear space 22 is provided between the handle and the part 20.

At the active surface of the cam, the cam also has a protruding tooth 26 that is inserted under the shelf 25 like the front tooth 17. In this manner removal of the handle is prevented when the cam is in a coupling position (shown as a continuous line in the figures).

In figure 2 a dashed line shows the free position of the cam in which the handle has to be attached or detached. In this position the tooth 26 of the cam does not interfere with the shelf and the handle can be removed by tilting the handle upwards and then extracting the front tooth 17 from the hole 16.

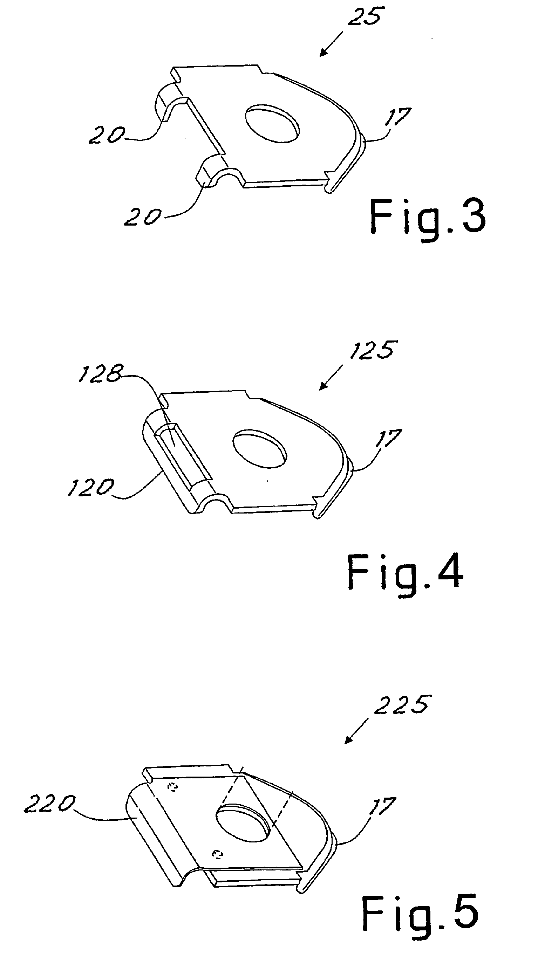

In figures 3 and 4 there are shown examples of a preferred embodiment of the single stiff plate 25 (fig. 3) or 125 (fig. 4) produced by pressing and with the flexible part integral therewith. In order to have appropriate elastic flexibility, the flexible part is made in figure 3 in the form of two spaced and relatively thin tabs 20. In figure 4, on the other hand, there is shown an alternative embodiment where the flexible part has the shape of a single wide tab 120 discharged into the central zone by means of a rectangular hole or elongated slit 128.

In figure 5 there is shown a further version with an element 225, formed by a stiff plate that makes the tooth 17, and an element 220 made of elastic material (for example a sheet of harmonic steel), that makes the rear elastic tab. The two pieces can be mutually connected by the same pivot 27 rotating the cam (as shown in the figure), or be fixed with other systems that are easily imaginable by those skilled in the art (for example rivets, joints or the like).

At this point it is clear how the preset objects are reached. In the release position (a dashed line in figure 2) the handle is easily couplable with or uncouplable from the pan, whilst simply rotating the lever 18 to the lock position (figures 1 and 2) provides stable coupling without clearance owing to the elasticity of the lock. In order to reduce costs, first and second elements can be advantageously made of sheet metal that is trimmed and folded and has quite wide tolerances owing to the elastic coupling according to the invention.

Naturally, the above description of an embodiment applying the innovative principles of the present invention is provided merely by way of example of such innovative principles and must not therefore be taken to limit the scope of what is claimed herein. For example, the shapes and proportions of the various elements may vary according to specific needs. The handle may have any shape and not necessarily have an elongated form.

## Claims

1. Removable coupling between a handle (14) and a saucepan (12) comprising a first element (11) fixed to the saucepan and a second element (13) fixed to the handle, the first element (11) comprising in turn a protruding shelf (15) with a through hole (16) therein and the second element (13) comprising a coupling tooth (17) that is inserted into said hole (16) to traverse said hole (16) and be arranged parallel to and below the shelf, there being a cam element (19) in the second element (13), which is rotatable to a locking position to push with a first cam surface (23) on an edge of said hole (16) to grip a part (21) of the shelf (15) between said first cam surface (23) and a facing protruding part (20) of the second element (13), **characterised in that** the distance between the cam surface (23) and the protruding part (20) is made less than the width of the part (21) of the shelf that has to be gripped and the protruding part (20) is elastically yieldable to enable the cam to rotate in the gripping position.

2. Coupling according to claim 1, **characterized in that** the cam element (19) has a step (26) below the first cam surface (23), which in the locking position is arranged below the shelf part (21) on which the first cam surface (23) pushes.

3. Coupling according to claim 1, **characterized in that** the protruding elastic part (20) is opposite the tooth (17) with respect to the cam.

4. Coupling according to claim 1, **characterized in that** the cam element (19) is connected by a pivot to a rotating element (18) arranged above the handle.

5. Coupling according to claim 4, **characterized in that** the pivot is riveted on a metal plate (30) in which the rotation element (18) is snap-fitted.

6. Coupling according to claim 5, **characterized in that** a tooth (31) on the plate (30) constitutes a stop to the rotation of the cam.

7. Coupling according to claim 1, **characterized in that** the second element (13) is made with a plate (25, 125) made of trimmed and folded sheet metal with a front part that forms the coupling tooth (17) and a rear part that forms the protruding part (20) in the shape of a least a one-piece elastically yieldable tab.

8. Coupling according to claim 7, **characterized in that** the protruding part has the shape of two parallel narrow tabs (20).

9. Coupling according to claim 7, **characterized in that** the protruding part has the shape of a tab (120) that is wide and centrally discharged by an elongated hole (128).

10. Coupling according to claim 7, **characterized in that** the protruding part is made with an elastic element (220) connected to a stiff plate that makes the coupling tooth (17).

## Patentansprüche

1. Lösbare Kopplung zwischen einem Stiel (14) und einem Kochtopf (12), die ein am Kochtopf befestigtes erstes Element (11) und ein am Stiel befestigtes zweites Element (13) umfasst, wobei das erste Element (11) seinerseits eine vorspringende Auflage (15) mit einem Durchgangsloch (16) darin umfasst und das zweite Element (13) einen Kopplungszahn (17) umfasst, der so in dieses Loch (16) eingesetzt ist, dass er das Loch (16) durchquert und parallel zur und unterhalb der Auflage angeordnet ist, wobei sich ein Nockenelement (19) im zweiten Element (13) befindet, das in eine Verriegelungsstellung gedreht werden kann, um mit einer ersten Nockenfläche (23) auf einen Rand des Lochs (16) zu drücken, um einen Teil (21) der Auflage (15) zwischen der ersten Nockenfläche (23) und einem gegenüberliegenden vorspringenden Teil (20) des zweiten Elements (13) zu greifen, **dadurch gekennzeichnet, dass** der Abstand zwischen der Nockenfläche (23) und dem vorspringenden Teil (20) kleiner als die Breite des Teils (21) der zu greifenden Auflage ausgeführt ist und dass der vorspringende Teil (20) elastisch nachgebend ist, um die Drehung des Nockens in die Greifstellung zu ermöglichen.

2. Kopplung nach Anspruch 1, **dadurch gekennzeichnet, dass** das Nockenelement (19) eine Stufe (26) unterhalb der ersten Nockenfläche (23) aufweist, die in der Verriegelungsstellung unter dem Auflagenteil (21) angeordnet ist, auf den die erste Nockenfläche (23) drückt.

3. Kopplung nach Anspruch 1, **dadurch gekennzeichnet, dass** der vorspringende elastische Teil (20) dem Zahn (17) bezüglich des Nockens gegenüberliegt.

4. Kopplung nach Anspruch 1, **dadurch gekennzeichnet, dass** das Nockenelement (19) durch einen Drehzapfen mit einem über dem Stiel angeordneten Drehelement (18) verbunden ist.

5. Kopplung nach Anspruch 4, **dadurch gekennzeichnet, dass** der Drehzapfen auf eine Metallplatte (30) genietet ist, in die das Drehelement (18) eingerastet ist.

6. Kopplung nach Anspruch 5, **dadurch gekennzeichnet, dass** ein Zahn (31) auf der Platte (30) einen Anschlag für die Drehung des Nockens bildet.

7. Kopplung nach Anspruch 1, **dadurch gekennzeichnet, dass** das zweite Element (13) mit einer aus einem zugeschnittenen und abgekanteten Metallblech bestehenden Platte (25, 125) ausgeführt ist, die einen vorderen Teil, der den Kopplungszahn (17) bildet, und einen hinteren Teil aufweist, der den vorspringenden Teil (20) in Gestalt einer mindestens einteiligen elastisch nachgebenden Zunge bildet.

8. Kopplung nach Anspruch 7, **dadurch gekennzeichnet, dass** der vorspringende Teil die Form von zwei parallelen schmalen Zungen (20) hat.

9. Kopplung nach Anspruch 7, **dadurch gekennzeichnet, dass** der vorspringende Teil die Form einer Zunge (120) hat, die breit und in der Mittel durch ein Langloch (128) entlastet ist.

10. Kopplung nach Anspruch 7, **dadurch gekennzeichnet, dass** der vorspringende Teil mit einem elastischen Element (220) ausgeführt ist, das mit einer steifen Platte verbunden ist, die den Kopplungszahn (17) bildet.

## Revendications

1. Accouplement amovible entre une poignée (14) et une casserole (12) comprenant un premier élément (11) fixé à la casserole et un deuxième élément (13) fixé à la poignée, le premier élément (11) comprenant à son tour un plateau en saillie (15) avec un trou traversant (16) dans celui-ci et le deuxième élément (13) comprenant une dent d'accouplement (17) qui est insérée dans ledit trou (16) pour traverser ledit trou (16) et est disposée parallèle et au-dessous du plateau, un élément de came (19) étant prédisposé dans le deuxième élément (13), lequel est rotatif vers une position de blocage pour pousser avec une première surface de came (23) sur un bord dudit trou (16) pour saisir une partie (21) du plateau (15) entre ladite première surface de came (23) et une partie en saillie opposée (20) du deuxième élément (13), **caractérisé en ce que** la distance entre la surface de came (23) et la partie en saillie (20) est réalisée inférieure à la largeur de la partie (21) du plateau qui doit être saisi et la partie en saillie (20) est déformable élastiquement pour permettre à la came de pivoter dans la position de prise.

2. Accouplement selon la revendication 1, **caractérisé en ce que** l'élément de came (19) a un échelon (26) au-dessous de la première surface de came (23), lequel, dans la position de blocage, est disposé au-dessous de la partie de plateau (21) sur laquelle pousse la première surface de came (23).

3. Accouplement selon la revendication 1, **caractérisé en ce que** la partie élastique en saillie (20) est opposée à la dent (17) par rapport à la came.

4. Accouplement selon la revendication 1, **caractérisé en ce que** l'élément de came (19) est connecté par un pivot à un élément rotatif (18) disposé au-dessus de la poignée.

5. Accouplement selon la revendication 4, **caractérisé en ce que** le pivot est riveté sur une plaque métallique (30) dans laquelle l'élément rotatif (18) est enclenché à pression.

6. Accouplement selon la revendication 5, **caractérisé en ce qu'**une dent (31) sur la plaque (30) constitue une butée pour la rotation de la came.

7. Accouplement selon la revendication 1, **caractérisé en ce que** le deuxième élément (13) est réalisé avec une plaque (25, 125) constitué d'une feuille de métal pliée et ébavurée avec une partie frontale qui forme la dent d'accouplement (17) et une partie postérieure qui forme la partie en saillie (20) sous la forme d'au moins une languette déformable élastiquement d'une seule pièce.

8. Accouplement selon la revendication 7, **caractérisé en ce que** la partie en saillie a la forme de deux languettes étroites parallèles (20).

9. Accouplement selon la revendication 7, **caractérisé en ce que** la partie en saillie a la forme d'une languette (120) qui est large et centralement déchargée par un trou oblong (128).

10. Accouplement selon la revendication 7, **caractérisé en ce que** la partie en saillie est réalisée avec un élément élastique (220) connecté à une plaque rigide qui réalise la dent d'accouplement (17).
